# EUROPÄISCHE PATENTSCHRIFT

(11) **EP 2 458 131 B1**
(45) Veröffentlichungstag und Bekanntmachung des Hinweises auf die Patenterteilung: **04.03.2020**
(21) Anmeldenummer: 11190059.3
(22) Anmeldetag: 22.11.2011
(51) Int. Cl.: E21B 10/44, B21J 5/02, B23P 15/32, B21K 5/10

(54) **Verfahren zur Herstellung des Einsteckendes eines Bohrers**
Method for manufacturing the insertion end of a drill
Procédé pour la fabrication de l'extrémité enfichable d'un foret

(30) Priorität: 24.11.2010 DE 102010061905
(43) Veröffentlichungstag der Anmeldung: 30.05.2012
(73) Patentinhaber: Mac Panther GmbH, 28199 Bremen (DE)
(72) Erfinder:
(74) Vertreter: Eisenführ Speiser

(56) Entgegenhaltungen:
- EP-A1- 2 181 783
- EP-A1- 2 361 702
- DE-A1- 19 604 279
- DE-U1- 8 433 275
- US-A- 4 389 870

## Beschreibung

Die Erfindung betrifft ein Verfahren zur Herstellung eines Einsteckendes eines Bohrers, insbesondere eines Bohrers der axialbeweglich in einer Werkzeugaufnahme eines Bohrhammers befestigt ist, wobei das Einsteckende mindestens eine Drehmitnahmenut und mindestens eine Verriegelungssenke aufweist, wobei die Verriegelungssenke vorzugsweise als Verriegelungsnut ausgebildet ist. Die Erfindung betrifft ferner ein Halbwerkzeug, welches mindestens eine Drehmitnahmenut und mindestens eine Verriegelungssenke aufweist, wobei die Verriegelungssenke vorzugsweise als Verriegelungsnut ausgebildet ist. Die Erfindung betrifft ferner einen Bohrer, welcher mindestens eine Drehmitnahmenut und mindestens eine Verriegelungssenke aufweist, wobei die Verriegelungssenke vorzugsweise als Verriegelungsnut ausgebildet ist. Die Erfindung betrifft ferner eine Kombination von Matrizen zur Herstellung eines Einsteckendes eines Bohrers, insbesondere eines Bohrers der axialbeweglich in einer Werkzeugaufnahme eines Bohrhammers befestigt ist, wobei das Einsteckende mindestens eine Drehmitnahmenut und mindestens eine Verriegelungssenke aufweist, wobei die Verriegelungssenke vorzugsweise als Verriegelungsnut ausgebildet ist.

Verfahren, Halbwerkzeuge und Bohrer der eingangs erwähnten Art sind bekannt. Verfahren, Halbwerkzeuge oder Bohrer der eingangs genannten Art sind insbesondere aus der DE 84 33 275 U1, der EP 2 181 783 A1, der EP 2 361 702 A1, der US 4 389 870 A, und der DE 196 04 279 A1 bekannt geworden. Zur Herstellung der Einsteckenden von Bohrern kommen für gewöhnlich spanende Werkzeugmaschinen zum Einsatz. Diese Werkzeugmaschinen eignen sich zur Herstellung von meist runden Werkstücken durch Trennen des Werkstoffs mit einer geometrisch bestimmten Schneide. Zur Produktion großer Stückzahlen werden typischerweise sogenannte CNC-Maschinen eingesetzt. (CNC steht dabei für *Computerized Numerical Control.*) Insbesondere wird dabei die Lage des Werkzeugs, die Geschwindigkeit seiner Spanungsbewegungen, sowie die Umdrehungsgeschwindigkeit und Lage der Spindel (und damit des Werkstücks) mittels Regeleinrichtungen ständig mit den Sollvorgaben der Steuerung verglichen.

Das spanende Einbringen der Drehmitnahme- und Verriegelungsnut führt unweigerlich zu Materialverlusten in Form der mechanisch abgetrennten Späne. Ferner ist die Produktionsrate bei der Verwendung von herkömmlichen Werkzeugmaschinen begrenzt. So können mit herkömmlichen Verfahren bestenfalls 15 Teile pro Minute hergestellt werden.

Die spanende Fertigung der Drehmitnahme- und Verriegelungsnuten erfolgt bei den gegenwärtig am häufigsten zum Einsatz kommenden Werkzeugmaschinen nacheinander, wobei der Bohrerrohling mehrmals neu eingespannt werden muss. Dabei treten häufig Positionierungsfehler auf, welche später das bestimmungsgemäße Einstecken des Bohrers in die Bohrmaschine verhindern.

Aufgabe der Erfindung ist daher die Bereitstellung eines verbesserten Verfahrens zur Herstellung eines Einsteckendes eines Bohrers, welches einerseits die nachteiligen Materialverluste vermeidet, andererseits eine Verbesserung der Herstellungsrate ermöglicht und zugleich Lagefehler der Nuten des Einsteckendes vermeidet.

Diese Aufgabe wird erfindungsgemäß gelöst durch ein Verfahren gemäß Anspruch 1. Bei dem erfindungsgemäßen Verfahren werden im Bereich des Einsteckendes des Bohrers eine oder mehrere Senken oder Nuten eingebracht, von denen eine erste Senke oder Nut insbesondere als Drehmitnahmenut wirkt, und von denen eine zweite Senke oder Nute insbesondere als Verriegelungsnut wirkt. Das Einbringen der Senken oder Nuten erfolgt erfindungsgemäß durch einen Umformungsschritt, etwa durch Einpressen in eine Matrize oder in ein Gesenk. Somit werden die Senken oder Nuten insbesondere nicht spanend erzeugt. In der Folge wird dann zumindest eine der Senken oder Nuten, insbesondere eine als Verriegelungsnut wirkende Senke oder Nut, einem weiteren Umformungsschritt unterzogen, der die vorher zum Ende des Bohrers hin geöffnete Senke oder Nut schließt, so dass sich die Senke oder Nut nicht mehr bis zur Endfläche des Einsteckendes erstreckt. In dem Fall, in dem das Einsteckende einen kleineren Durchmesser als der vordere Arbeitsabschnitt aufweist, wird vor dem Einbringen der Nuten zunächst das Einsteckende durch Fließpressen oder Verjüngen auf den erforderlichen Durchmesser verkleinert.

Ein besonderer Vorteil des erfindungsgemäßen Verfahrens gegenüber herkömmlichen Verfahren zur Herstellung des Einsteckendes eines Bohrers besteht zum einen in einer Materialersparnis und zum anderen in einer signifikant erhöhten Herstellungsrate. Das erfindungsgemäße Einformen der Nuten ermöglicht die Herstellung von bis zu 120 Teilen pro Minute, also dem achtfachen Wert herkömmlicher Verfahren. Ferner wird durch die Anwendung von Umformungsverfahren die Erzeugung von Metallspänen und damit die Entstehung von Materialverlusten vermieden. Dies stellt einen ganz erheblichen Zeit- und Kostenvorteil bei der Herstellung des erfindungsgemäßen Bohrers dar, denn ein solcher Bohrer ist ein Verschleißartikel, bei dem es ganz entscheidend auf den Herstellungspreis ankommt. Das erfindungsgemäße Verfahren hat außerdem den Vorteil, dass Lagefehler der Nuten zueinander schon verfahrensbedingt unmöglich sind.

Gemäß Erfindung erfolgt das Einformen der mindestens einen Drehmitnahmenut und der mindestens einen Verriegelungssenke durch Massivumformung, insbesondere durch Fließpressen und/oder Verjüngen und das Schließen der Verriegelungssenke in einer Folgematrize. Diese Verwendung einer weiteren Matrize für den Verfahrensschritt des Schließens der Verriegelungsnut, liefert ebenfalls den erfindungsgemäßen Vorteil der nicht-spanenden Verarbeitung des Einsteckendes. Ferner führt der Einsatz von getrennten Matrizen zu einer erhöhten Effizienz und schnelleren Verarbeitung. Schließlich senkt die Verwendung von zwei einfachen Matrizen, die selbst wiederum einfacher herzustellen sind als eine komplizierte Matrize, die Herstellungskosten.

Gemäß Erfindung werden vor dem Schließen der Verriegelungssenke ein oder mehrere Füllkörper, welche in Aussparungen der Folgematrize zumindest radialbeweglich geführt sind, in die Verriegelungssenke geschoben. Der Einsatz solcher Füllkörper erhöht zum einen die Stabilität des Werkstücks beim Umformungsvorgang und trägt zum anderen zum erleichterten Umformen der Verriegelungssenke in ihre endgültige Form bei.

Gemäß einer weiteren bevorzugten Ausführungsform weist der Füllkörper eine Kontur auf, welche dem Negativ eines dem hinteren Ende des Bohrers zugewandten Bereichs der Verriegelungssenke entspricht. Auf diese Weise wird insbesondere der Verfahrensschritt der Massivumformung erleichtert, denn da die Füllkörper einem Negativ der Endkontur der Verriegelungssenke entsprechen, wird die Rohform der Verriegelungssenke, also die offene Verriegelungssenke, mittels Stauchen unter Verwendung eines Stauchstempels in ihre Endform überführt.

Gemäß einer weiteren bevorzugten Ausführungsform ist der Füllkörper als Zylinderstift ausgebildet, wobei der Füllkörper in der Folgematrize geführt ist, und wobei ein in die Verriegelungssenke eingreifender Bereich des Füllkörpers einem Negativ eines dem hinteren Ende des Bohrers zugewandten Bereichs der Verriegelungssenke entspricht. Die Ausbildung des Füllkörpers als Zylinderstift erleichtert insbesondere das Einbringen der Führungsflächen für den Füllkörper in die Folgematrize. Somit wird die Herstellung der Matrizen und Füllkörper kostengünstiger.

Gemäß einer weiteren bevorzugten Ausführungsform weist die Folgematrize Abschnitte auf, wobei Querschnitte der Abschnitte der Folgematrize einem Negativ von Querschnitten der Drehmitnahmenuten entsprechen. Die Ausbildung von Querschnitten von Abschnitten der Folgematrize als Negativ von Querschnitten der Drehmitnahmenuten ist besonders vorteilhaft zur Fixierung des Einsteckrohlings in der Matrize. Denn durch Einführen der Drehmitnahmenuten des Rohlings in die den Drehmitnahmenuten entsprechenden Abschnitte der Matrize wird eine Rotation des Rohlings im Inneren der Matrize vermieden, was Ausschuss verringert. Außerdem wird dadurch verhindert, dass beim Stauchvorgang zum Schließen der Verriegelungsnut die Drehmitnahmenut gleichfalls verformt wird.

Gemäß einer weiteren bevorzugten Ausführungsform weist der Stauchstempel an einem Vorderende Aussparungen auf, welche einem Negativ von Querschnitten der Drehmitnahmenuten entsprechen. Die Ausbildung von Aussparungen am Vorderende des Stauchstempels als Negativ von Querschnitten der Drehmitnahmenuten ist besonders vorteilhaft zur Fixierung des Stauchstempels zur Folgematrize während des Schließens der Verriegelungsnuten.

Gemäß einer weiteren bevorzugten Ausführungsform weist der Stauchstempel eine konvexe Vorderseite auf. Um den hohen Drücken beim Schließen der Verriegelungsnuten standzuhalten, ist eine konvexe Ausformung der Vorderseite des Stauchstempels besonders vorteilhaft. Für einen solchen Stauchstempel wird darüber hinaus auch unabhängig Schutz beansprucht. Durch die erfindungsgemäße Ausformung des Stauchstempels wird die Stabilität des Stempels beim Umformen erhöht und dessen Verwendungshöchstdauer verlängert. Außerdem wird dadurch der Materialfluss beim Schließen in die richtige Richtung gelenkt.

Gemäß einer weiteren bevorzugten Ausführungsform umfasst das Einformen und das Schließen einen Verfahrensschritt der Kaltumformung. Eine Kaltumformung betrifft typischerweise eine Umformung bei einer Temperatur deutlich unterhalb der Rekristallisationstemperatur. Besonders vorteilhaft ist hierbei, dass die Vorgabe enger Maßtoleranzen möglich ist, sowie dass typischerweise wenig bis keine Oxidation oder Verzundern der Oberfläche zu erwarten ist. Schließlich wird durch die Anwendung einer Kaltumformung die Festigkeit des Werkstücks erhöht.

Gemäß einer weiteren bevorzugten Ausführungsform umfasst das Einformen einen Verfahrensschritt der Kaltumformung und das Schließen einen Verfahrensschritt der Warm- oder Halbwarmumformung. Unter Warmumformung sollen dabei all diejenigen Umformschritte verstanden werden, die oberhalb der Rekristallisationstemperatur eines Metalls stattfinden. Besonders vorteilhaft ist hierbei, dass sehr hohe Umformgrade bei vergleichsweise geringen Umformkräften aufgebracht werden können. Ferner ändern sich Festigkeit und Bruchdehnung des umgeformten Werkstoffs nur unwesentlich.

Gemäß einer weiteren bevorzugten Ausführungsform umfassen das Einformen und das Schließen jeweils einen Verfahrensschritt einer Warm- oder Halbwarmumformung.

Gemäß einer weiteren bevorzugten Ausführungsform erfolgen das Einformen und das Schließen auf einer Mehrstufenpresse. Mehrstufenpressen eignen sich insbesondere für die Massivumformung von Stahl oder Nichteisenmetall. Ein Arbeitsvorgang auf einer Mehrstufenpresse umfasst das Transportieren eines Presskörpers von einer Matrize zur nächsten, das Einführen des Presskörpers in die Matrizen und anschließend das Umformen des Presskörpers mittels Druck durch Stempel in den Matrizen (Massivumformung).

Gemäß einer weiteren bevorzugten Ausführungsform erfolgen das Einformen und das Schließen auf zwei oder mehr Maschinen. Das Verteilen von Einformschritt und Schließschritt der Senken oder Nuten des Einsteckendes erhöht die Flexibilität bei der Durchführung des Herstellungsverfahrens. So können einzelne Verfahrensschritte ausgetauscht oder modifiziert werden. Beispielsweise kann zwischen Kalt- und Warmumformung beim Schließen der Verriegelungsnuten gewechselt werden, ohne dass die vorausgehenden Arbeitsschritte angepasst werden müssten.

Gemäß einer weiteren bevorzugten Ausführungsform wird ein vorderer Arbeitsabschnitt des Bohrers, d.h. ein dem Einsteckende gegenüberliegender Abschnitt des Bohrers, auf der gleichen Maschine durch Massivumformung, insbesondere durch Fließpressen und Verjüngen, in seinem Durchmesser erzeugt, die auch die Drehmitnahme- und Verriegelungsnuten einformt. Das Einformen des vorderen Arbeitsabschnittes auf der gleichen Maschine bewirkt eine erhöhte Arbeitseffizienz, denn das Werkstück (hier: der Rohling) muss nur einmal zur Verarbeitung einer Maschine zugeführt werden.

Gemäß einer weiteren bevorzugten Ausführungsform werden in den Arbeitsabschnitt des Bohrers die Nuten für einen Bohrkleintransport durch Fließpressen oder Verjüngen eingeformt.

Die Erfindung betrifft ferner ein Bohrerhalbzeug mit einem Einsteckende, wobei das Einsteckende nach dem erfindungsgemäßen Verfahren hergestellt worden ist. Wie oben angedeutet, besteht ein besonderer Vorteil des erfindungsgemäßen Bohrerhalbzeugs zum einen in einer Materialersparnis und zum anderen in einer signifikant erhöhten Herstellungsrate. Das erfindungsgemäße Pressen der Nuten ermöglicht die Herstellung von bis zu 120 Teilen pro Minute, also dem achtfachen Wert herkömmlicher Verfahren. Ferner wird durch die Anwendung von Umformungsverfahren die Erzeugung von Metallspänen und damit die Entstehung von Materialverlusten vermieden. Zusätzlich werden Lagefehler der Nuten des Einsteckendes vermieden.

Die Erfindung betrifft ferner einen Bohrer mit einem Einsteckende, wobei das Einsteckende nach dem erfindungsgemäßen Verfahren hergestellt worden ist. Wie oben angedeutet, besteht ein besonderer Vorteil des erfindungsgemäßen Bohrers zum einen in einer Materialersparnis und zum anderen in einer signifikant erhöhten Herstellungsrate. Das erfindungsgemäße Pressen der Nuten ermöglicht die Herstellung von bis zu 120 Teilen pro Minute, also dem achtfachen Wert herkömmlicher Verfahren. Ferner wird durch die Anwendung von Umformungsverfahren die Erzeugung von Metallspänen und damit die Entstehung von Materialverlusten vermieden. Zusätzlich werden Lagefehler der Nuten des Einsteckendes vermieden.

Die Erfindung betrifft ferner eine Kombination von Matrizen zur Herstellung eines Einsteckendes eines Bohrers, nach dem erfindungsgemäßen Verfahren. Wie oben angedeutet, besteht ein besonderer Vorteil der erfindungsgemäßen Matrize zum einen in einer Materialersparnis und zum anderen in einer signifikant erhöhten Herstellungsrate von Bohrers und Bohrerhalbzeug. Das erfindungsgemäße Pressen der Nuten ermöglicht die Herstellung von bis zu 120 Teilen pro Minute, also dem achtfachen Wert herkömmlicher Verfahren. Ferner wird durch die Anwendung von Umformungsverfahren die Erzeugung von Metallspänen und damit die Entstehung von Materialverlusten vermieden.

Besonders bevorzugte Ausführungsformen werden nachstehend anhand der Figuren erläutert. Es zeigen
- Figuren 1A-1D:: Bohrer, der nach einer Ausführungsform des erfindungsgemäßen Verfahrens hergestellt wird;
- Figur 2:: Arbeitsschritte einer Ausführungsform des erfindungsgemäßen Verfahrens zur Herstellung eines Fertigteils mit zwei offenen und zwei verschlossenen Nuten aus einem Rohling ohne Nuten;
- Figuren 2a-2i: Darstellungen und vergrößerte Ausschnitte des Zustands des Bohrers während der einzelnen Arbeitsschritte des Verfahrens gemäß den Figur 2;
- Figuren 3A-3D:: Querschnittszeichnungen einer Ausführungsform einer erfindungsgemäßen Umformungsmatrize in geöffnetem und geschlossenem Zustand; und
- Figur 4: eine Ausführungsform eines erfindungsgemäßen Stauchstempels.

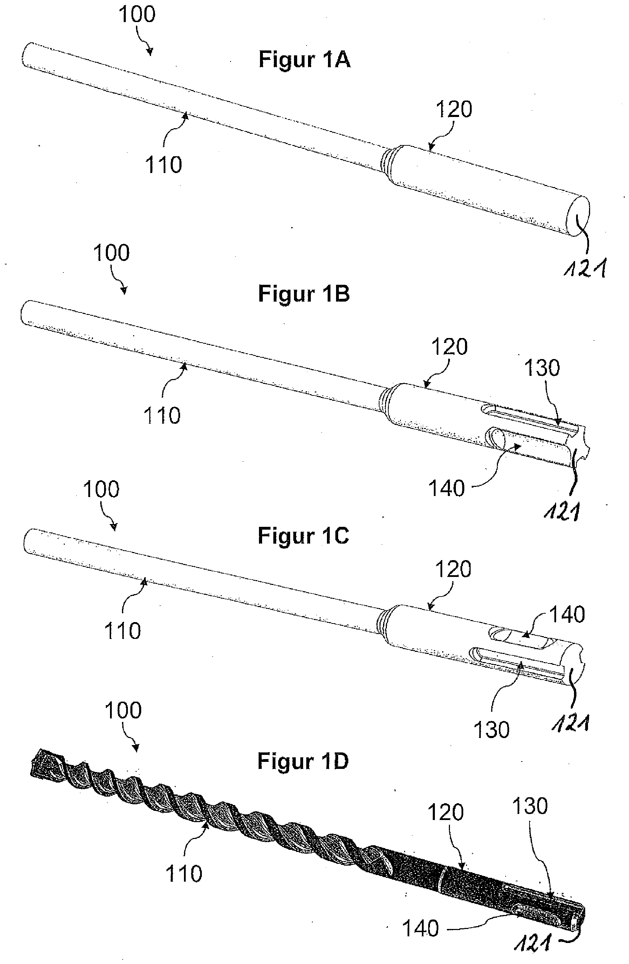

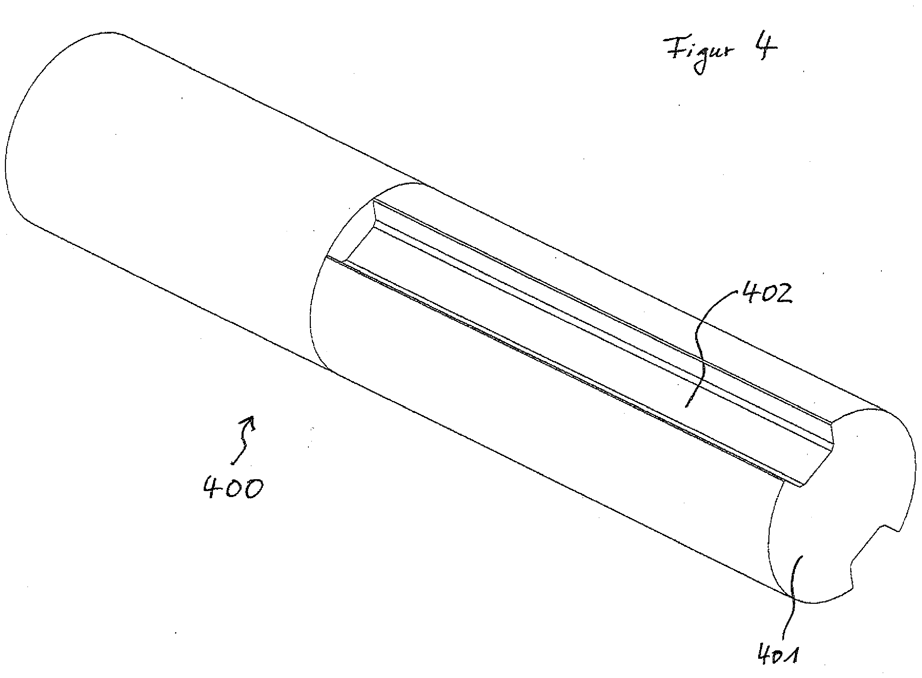

Figuren 1A-1D zeigen Zwischenprodukte eines Bohrers 100, der nach dem erfindungsgemäßen Verfahren hergestellt wird. Bohrer 100 weist einen Arbeitsabschnitt 110 und ein Einsteckende 120 und eine Endfläche 121 auf. Figur 1A zeigt den erfindungsgemäß hergestellten Bohrer 100 im Rohzustand, vor der Einformung von Nuten im Einsteckende 120. Figur 1B zeigt den erfindungsgemäßen Bohrer 100 nachdem im Einsteckende 120 eine Drehmitnahmenut 130 sowie eine Verriegelungsnut 140 eingeformt worden sind. In dem in Figur 1B gezeigten Zustand ist die Verriegelungsnut 140 zur Endfläche 121 des Einsteckendes 120 hin geöffnet. Figur 1C zeigt Bohrer 100 nach einem weiteren Verfahrensschritt, nach dem Verriegelungsnut 140 geschlossen worden ist, beispielsweise mit einem Stauchstempel 400 gemäß Figur 4. Schließlich zeigt Figur 1D den fertigen Bohrer 100, der zusätzlich zur Drehmitnahmenut 130 und zur Verriegelungsnut 140 eine spiral- oder wendelförmige Ausgestaltung des Arbeitsabschnitts 110 aufweist.

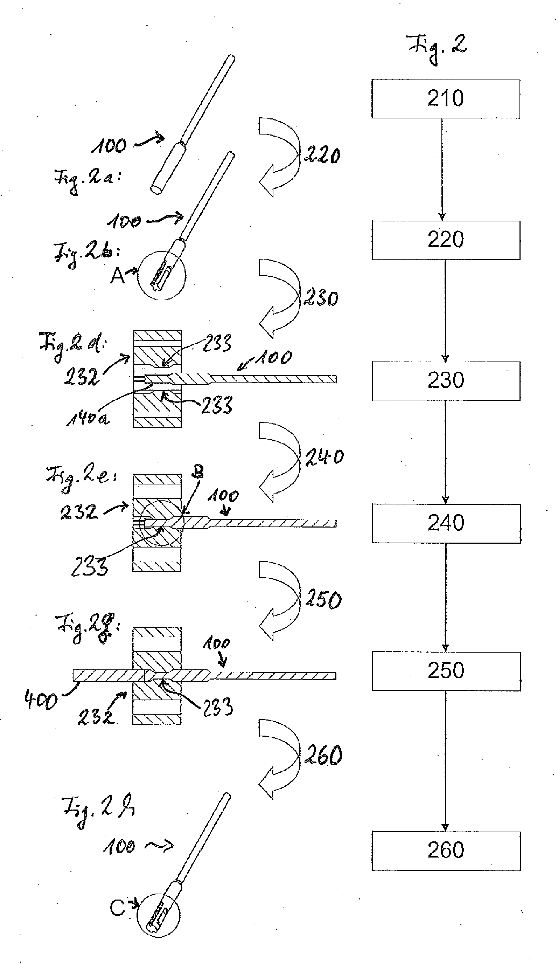

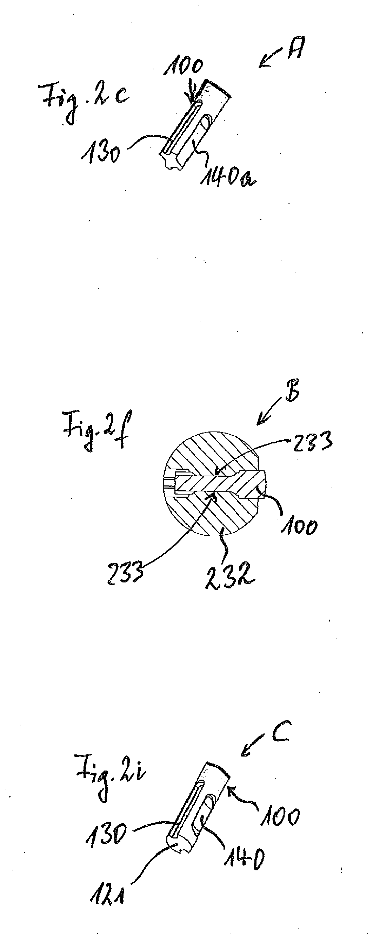

Figur 2 zeigt Zwischenschritte 210, 220, 230, 240, 250, 260 des erfindungsgemäßen Verfahrens zur Herstellung eines fertigen Bohrers 100 gemäß den Figuren 1A-1D mit zwei offenen Nuten 130 und zwei verschlossenen Nuten 140 aus einem noch keine Nuten aufweisenden Rohling eines Bohrers 100. Die Figuren 2a bis 2i zeigen entsprechende Darstellungen und vergrößerte Ausschnitte des Zustands des Bohrers 100 während der einzelnen Arbeitsschritte 210, 220, 230, 240, 250, 260 des Verfahrens gemäß der Figur 2, wobei in den Figuren 2a bis 2i die Arbeitsschritte 220, 230, 240, 250, 260 zusätzlich durch geschwungene Pfeile dargestellt sind.

In dem Verfahrensschritt 210 wird das erfindungsgemäße Verfahren durch Bereitstellen eines Bohrerrohlings 100 gemäß Figur 2a begonnen. Aus dem Rohling werden im darauffolgenden Verfahrensschritt 220 zwei Drehmitnahmenuten 130 und zwei Verriegelungsnuten 140 geformt, vorzugsweise durch Fließpressen oder Verjüngen in Matrizen. Es sind auch andere Verteilungen der Nuten denkbar, insbesondere mit mehr oder mit weniger als zwei Drehmitnahmenuten 130 und Verriegelungsnuten 140. Im Verfahrensschritt 220 werden erfindungsgemäß offene Verriegelungsnuten 140 erzeugt, wie aus Figur 2b und dem vergrößerten Ausschnitt A gemäß Figur 2c ersichtlich. Im nächsten Verfahrensschritt 230 wird der Rohling in eine offene Schiebematrize 232 gemäß Figur 2d eingebracht. Die Schiebematrize 232 wird im nächsten Schritt 240 geschlossen, siehe Figur 2e und den vergrößerten Ausschnitt B gemäß Figur 2f. Die Schiebematrize 232 weist Erhebungen 233 auf, die in die im nächsten Schritt zu schließenden, noch offenen Nuten 140a, eingreifen.

Im darauffolgenden Schritt 250 wird zum Verschließen der Rundnut mittels des in Figur 4 dargestellten Stauchstempels 400 in der Figur 2g von links nach rechts der Stauchstempel 400 in die Schiebematrize 232 eingeführt und gegen die die Endfläche 121 des Bohrers 100 gedrückt. Dies führt zum Schließen der Rundnut und somit zu der Verriegelungsnut 140. Hierzu weist der Stauchstempel 400 Ausnehmungen 402 auf, welche einem Negativ von Querschnitten der Drehmitnahmenuten 130 entsprechen, so dass die Drehmitnahmenuten 130 auch nach dem Stauchvorgang offen sind. Die Ausbildung von Aussparungen 402 am Vorderende 401 des Stauchstempels 400 als Negativ von Querschnitten der Drehmitnahmenuten 130 ist daher besonders vorteilhaft zur Fixierung des Stauchstempels 400 zur Folgematrize während des Schließens der Verriegelungsnuten 140.

Im letzten Schritt 260 wird das gemäß Figur 2h der fertige Bohrer 100 mit zwei offenen Nuten 130 und zwei verschlossenen Nuten 140, siehe auch den vergrößerten Ausschnitt C gemäß Figur 2i wieder aus der Matrize 232 entfernt.

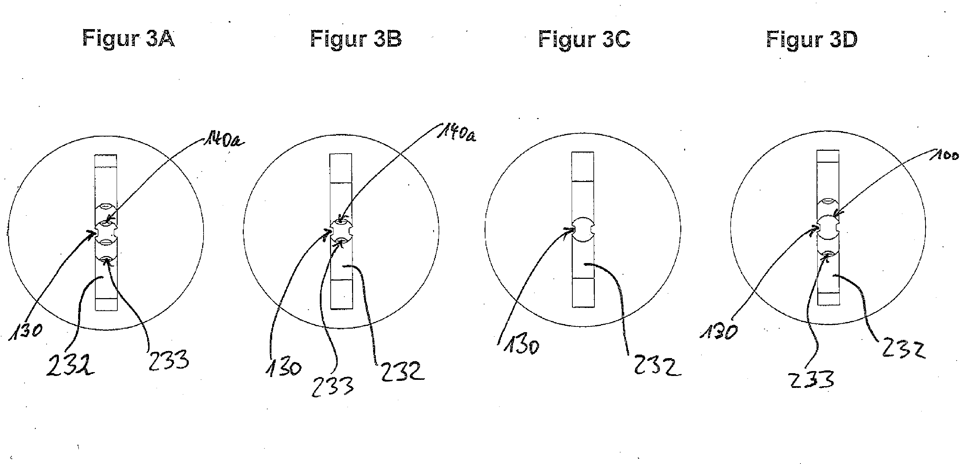

Figuren 3A-3D zeigen Querschnittszeichnungen der Umformungsmatrize 232 in geöffnetem und geschlossenem Zustand. So zeigt Figur 3A einen Rohling 100 mit noch offenen Nuten 140a, der in eine geöffnete Matrize 232 eingebracht worden ist. Diese Zeichnung entspricht dem oben beschriebenen Verfahrensschritt 230. Auch hier erkennt man, dass die Schiebematrize 232 Erhebungen 233 aufweist, die in die im nächsten Schritt zu schließenden, noch offenen Nuten 140a, eingreifen. Figur 3B zeigt die Matrize 232 mit den Erhebungen 233 im geschlossenen Zustand, zu einem Zeitpunkt, zu dem die Verriegelungsnuten 140 des Rohlings noch nicht geschlossen, d.h. noch als offene Nuten 140a vorhanden sind, wie aus der Endkontur des Rohlings 100, also eines dem hinteren Ende bzw. der Endfläche 121 des Bohrers 100 zugewandten Bereichs, ersichtlich ist: Denn die Endkontur weist in Figur 3B immer noch vier Vertiefungen 130, 140a auf, die der noch offenen Nuten 140a, die später geschlossen werden, und die der Drehmitnahmenuten 130, die offen bleiben sollen. Die in Figur 3B gezeigte Querschnittszeichnung entspricht dem oben beschriebenen Verfahrensschritt 240. Figur 3C zeigt dann, wie der Rohling 100, während die Matrize 232 geschlossen ist und mit den den fertigen Verriegelungsnuten 140 im Negativ entsprechenden Erhebungen 233 die Verriegelungsnuten 140 schützend, derart mittels des Stauchstempels 400 umgeformt wurde, dass die Enden der offenen Nuten 140a zur Bildung der Verriegelungsnuten 140 geschlossen sind. Die Figur 3C entspricht somit dem oben beschriebenen Verfahrensschritt 250. Wie in Figur 3D dargestellt, wird die Matrize 232 nach der erfolgten Umformung der Verriegelungsnuten 140 wieder geöffnet.

In Figur 3D ist auch das Fertigteil 100 mit zwei offenen Nuten 130 und zwei verschlossenen Nuten 140 im Querschnitt erkennbar. Dies entspricht dem oben beschriebenen Verfahrensschritt 260 bzw. dem in den Figuren 2h und 2i gezeigten fertigen Zustand des Bohrers 100.

Figur 4 zeigt eine Ausführungsform eines erfindungsgemäßen, oben beschriebenen Stauchstempels 400 mit an die Drehmitnahmenuten 130 angepassten Ausnehmungen 402.

## Patentansprüche

1. Verfahren zur Herstellung eines mit einer Endfläche (121) versehenen Einsteckendes (120) eines Bohrers (100), insbesondere eines Bohrers (100) der axialbeweglich in einer Werkzeugaufnahme eines Bohrhammers befestigt ist,
wobei das Einsteckende (120) mindestens eine Drehmitnahmenut (130) und mindestens eine Verriegelungssenke (140) aufweist, wobei die Verriegelungssenke (140) vorzugsweise als Verriegelungsnut ausgebildet ist,
mit den Verfahrensschritten Einformen der mindestens einen Drehmitnahmenut (130) und der mindestens einen Verriegelungssenke (140) in Matrizen, wobei die mindestens eine Drehmitnahmenut (130) und die mindestens eine Verriegelungssenke (140) zur Endfläche (121) hin geöffnet sind, und Schließen der mindestens einen Verriegelungssenke (140) mit einem Stauchstempel (400) zur Endfläche (121) hin, wobei das Einformen der mindestens einen Drehmitnahmenut (130) und der mindestens einen Verriegelungssenke (140) durch Massivumformung erfolgt, **dadurch gekennzeichnet, dass** das Schließen der Verriegelungssenke (140) in einer Folgematrize erfolgt, wobei vor dem Schließen der Verriegelungssenke (140) ein oder mehrere Füllkörper, welche in Aussparungen der Folgematrize zumindest radialbeweglich geführt sind, in die Verriegelungssenke (140) geschoben werden.

2. Verfahren nach Anspruch 1, wobei das Einformen der mindestens einen Drehmitnahmenut (130) und der mindestens einen Verriegelungssenke (140) durch Fließpressen und Verjüngen erfolgt.

3. Verfahren nach einem der vorstehenden Ansprüche, wobei der Füllkörper eine Kontur aufweist, welche dem Negativ eines dem hinteren Ende des Bohrers zugewandten Bereichs der Verriegelungssenke (140) entspricht.

4. Verfahren nach einem der vorstehenden Ansprüche, wobei der Füllkörper als Zylinderstift ausgebildet ist, wobei der Füllkörper in der Folgematrize geführt ist, und wobei ein in die Verriegelungssenke (140) eingreifender Bereich des Füllkörpers einem Negativ eines dem hinteren Ende des Bohrers zugewandten Bereichs der Verriegelungssenke (140) entspricht.

5. Verfahren nach einem der vorstehenden Ansprüche, wobei der Stauchstempel (400) eine konvexe Vorderseite aufweist.

6. Verfahren nach einem der Ansprüche 1 bis 5, wobei das Einformen einen Verfahrensschritt der Kaltumformung umfasst und wobei das Schließen einen Verfahrensschritt der Warm- oder Halbwarmumformung umfasst.

7. Verfahren nach einem der Ansprüche 1 bis 6, wobei das Einformen und das Schließen jeweils einen Verfahrensschritt einer Warm- oder Halbwarmumformung umfassen.

8. Verfahren nach einem der vorstehenden Ansprüche, wobei das Einformen und das Schließen auf einer Mehrstufenpresse erfolgen.

9. Verfahren nach einem der vorstehenden Ansprüche, wobei ein vorderer Arbeitsabschnitt (110) des Bohrers (100) auf der gleichen Maschine durch Massivumformung, insbesondere durch Fließpressen und/oder Verjüngen, in seinem Durchmesser erzeugt wird, die auch die Drehmitnahme- (130) und Verriegelungsnuten (140) einformt.

10. Verfahren nach einem der vorstehenden Ansprüche, wobei in einem vorderen Arbeitsabschnitt (110) des Bohrers (100) Nuten für einen Bohrkleintransport, insbesondere durch Fließpressen und/oder Verjüngen, mit eingepresst werden.

## Claims

1. Method for producing an insertion end (120) of a drill (100) provided with an end face (121), in particular a drill (100) which is axially movably mounted in a tool holder of a hammer drill, wherein the insertion end (120) has at least one rotational drive groove (130) and at least one locking recess (140), wherein the locking recess (140) is preferably formed as a locking groove, with the method steps of forming the at least one rotary driving groove (130) and the at least one locking recess (140) in dies, wherein the at least one rotational drive groove and the at least one locking recess are open towards the end face (121), and closing the at least one locking recess (140) with an upsetting punch (400) towards the end face (121), wherein the forming of the at least one rotary driving groove (130) and the at least one locking recess (14) takes place by a forming from solid process, **characterised in that** the closing of the locking recess (140) takes place in a progressive die, wherein before closing of the locking recess (14) one or more fillers, which is or are introduced radially movably into openings of the progressive die, are pushed into the locking recesses (140).

2. Method according to claim 1, wherein the forming of the at least one rotary driving groove (130) and the at least one locking recess (140) result from impact extrusion and tapering.

3. Method according to any one of the preceding claims, wherein the filler has a contour which corresponds to the inverse of a region of the locking recess (140) facing towards the rear end of the drill.

4. Method according to any one of the preceding claims, wherein the filler is designed as a cylindrical pin, wherein the filler is introduced into the progressive die, and wherein a region of the filler engaging in the locking recess (140) corresponds to an inverse of the region of the locking recess (140) facing towards the rear end of the drill.

5. Method according to any one of the preceding claims, wherein the upsetting punch (400) has a convex front face.

6. Method according to any one of claims 1 to 5, wherein the forming comprises a process step of the cold forming and wherein the closing comprises a process step of the hot forming and semi-hot forming.

7. Method according to any one of claims 1 to 6, wherein the forming and the closing in each case comprises a process step of a hot or semi-hot forming.

8. Method according to any one of the preceding claims, wherein the forming and closing take place on a multi-stage press.

9. Method according to any one of the preceding claims, wherein the diameter of an anterior work section (110) of the drill (100) is generated by forming from a solid, in particular by impact extrusion and/or tapering, on the same machine on which the rotational drive groove (130) and the locking recesses (140) are formed.

10. Method according to any one of the preceding claims, wherein grooves for cuttings transport are also pressed into an anterior work section (110) of the drill (100), in particular by impact extrusion and/or tapering.

## Revendications

1. Procédé de fabrication d'une extrémité enfichable (120) dotée d'une surface d'extrémité (121) d'un foret (100), en particulier d'un foret (100) qui est fixé de manière axialement mobile dans un logement d'outil d'un marteau perforateur,
dans lequel l'extrémité enfichable (120) présente au moins une rainure d'entraînement en rotation (130) et au moins un creux de verrouillage (140), dans lequel le creux de verrouillage (140) est réalisé de préférence en tant que rainure de verrouillage,
avec les étapes de procédé
de formage de l'au moins une rainure d'entraînement en rotation (130) et de l'au moins un creux de verrouillage (140) dans des matrices, dans lequel l'au moins une rainure d'entraînement en rotation (130) et l'au moins un creux de verrouillage (140) sont ouverts vers la surface d'extrémité (121), et
de fermeture de l'au moins un creux de verrouillage (140) avec un tampon de refoulage (400) vers la surface d'extrémité (121), dans lequel le formage de l'au moins une rainure d'entraînement en rotation (130) et de l'au moins un creux de verrouillage (140) a lieu par formage massif, **caractérisé en ce que**
la fermeture du creux de verrouillage (140) a lieu dans une matrice successive, dans lequel, avant la fermeture du creux de verrouillage (140), un ou plusieurs corps de remplissage, lesquels sont guidés de manière au moins radialement mobile dans des évidements de la matrice successive, sont poussés dans le creux de verrouillage (140).

2. Procédé selon la revendication 1, dans lequel le formage de l'au moins une rainure d'entraînement en rotation (130) et de l'au moins un creux de verrouillage (140) a lieu par extrusion et rétrécissement.

3. Procédé selon l'une quelconque des revendications précédentes, dans lequel le corps de remplissage présente un contour, lequel correspond au négatif d'une zone du creux de verrouillage (140) tournée vers l'extrémité arrière du foret.

4. Procédé selon l'une quelconque des revendications précédentes, dans lequel le corps de remplissage est réalisé en tant que tige cylindrique, dans lequel le corps de remplissage est guidé dans la matrice successive, et dans lequel une zone du corps de remplissage venant en prise dans le creux de verrouillage (140) correspond à un négatif d'une zone du creux de verrouillage (140) tournée vers l'extrémité arrière du foret.

5. Procédé selon l'une quelconque des revendications précédentes, dans lequel le tampon de refoulage (400) présente un côté avant convexe.

6. Procédé selon l'une quelconque des revendications 1 à 5, dans lequel le formage comprend une étape de procédé de transformation à froid et dans lequel la fermeture comprend une étape de procédé de transformation à chaud ou à mi-chaud.

7. Procédé selon l'une quelconque des revendications 1 à 6, dans lequel le formage et la fermeture comprennent respectivement une étape de procédé de transformation à chaud ou à mi-chaud.

8. Procédé selon l'une quelconque des revendications précédentes, dans lequel le formage et la fermeture ont lieu sur une presse à étages multiples.

9. Procédé selon l'une quelconque des revendications précédentes, dans lequel une section de travail avant (110) du foret (100) est générée sur la même machine par formage massif, en particulier par extrusion et/ou rétrécissement, dans son diamètre, qui forme également les rainures d'entraînement en rotation (130) et de verrouillage (140).

10. Procédé selon l'une quelconque des revendications précédentes, dans lequel, dans une section de travail avant (110) du foret (100), des rainures sont enfoncées pour un transport de débris de forage, en particulier par extrusion et/ou rétrécissement.
